(19) Europäisches Patentamt
European Patent Office
Office européen des brevets

(11) EP 2 056 072 B1

## (12) EUROPÄISCHE PATENTSCHRIFT

(45) Veröffentlichungstag und Bekanntmachung des Hinweises auf die Patenterteilung:
**17.12.2014 Patentblatt 2014/51**

(21) Anmeldenummer: **08012810.1**

(22) Anmeldetag: **16.07.2008**

(51) Int Cl.:
**G01D 5/347** *(2006.01)*

(54) **Verfahren zur Montage eines Körpers mit einer Winkelskalierung und Vorrichtung hierfür**

Method for mounting a body with angle scaling and device therefor

Procédé de montage d'un corps à l'aide d'une échelle d'angle et dispositif correspondant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.11.2007 DE 102007053046**

(43) Veröffentlichungstag der Anmeldung:
**06.05.2009 Patentblatt 2009/19**

(73) Patentinhaber: **Dr. Johannes Heidenhain GmbH 83301 Traunreut (DE)**

(72) Erfinder: **Hager, Andreas 84558 Kirchweidach (DE)**

(56) Entgegenhaltungen:
**EP-A2- 0 039 900       WO-A1-2006/114619
DE-A1- 3 726 260       JP-A- S60 102 520
US-A1- 2002 134 927**

EP 2 056 072 B1

**Beschreibung**

Die Erfindung betrifft ein Verfahren zur Montage eines Körpers mit einer Winkelskalierung gemäß dem Anspruch 1.

Der Körper mit einer Winkelskalierung ist insbesondere als Maßverkörperung in Winkelmesssystemen einsetzbar. Derartige Winkelmesssysteme dienen zur Messung von Drehbewegungen bzw. Drehstellungen eines Maschinenteils, etwa einer Welle. Die Drehbewegung wird dabei entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in Werkzeugmaschinen für die Messung von rotatorischen Bewegungen eingesetzt. Die Reproduzierbarkeit, bzw. Wiederholbarkeit der Drehwinkel von Maschinenteilen auf nur wenige Winkelsekunden genau ist beispielsweise bei vielen Maschinen von großer Bedeutung. Bei Werkzeugmaschinen ist insbesondere die absolute Genauigkeit der Messergebnisse eines Winkelmesssystems entscheidend. Häufig sind Winkelmesssysteme derart ausgestaltet, dass diese keine eigene Lagerung der relativ zueinander drehbaren Bauteile aufweisen.

Die Genauigkeit einer Winkelmessung wird wesentlich durch die Güte der Winkelskalierung, die Exzentrizität der Winkelskalierung zur Lagerung und durch die Rundlauf-Abweichung der Lagerung beeinflusst. Insbesondere ist bei Winkelmesssystemen ohne Eigenlagerung mit Exzentrizitäten auf Grund zu großer Montageabweichungen zu rechnen.

Aus der Offenlegungsschrift DE 37 34 870 A1 ist eine Anordnung bekannt, durch die eine reproduzierbare Einstellung einer Bezugslage erreichbar ist, ungeachtet der vorhandenen Exzentrizität.

In der Offenlegungsschrift DE 37 26 260 A1 wird eine Einrichtung zur Messung eines Drehwinkels beschrieben, bei der durch zwei gegenüberliegende Abtastköpfe Signale erzeugt werden, die im Betrieb der Einrichtung so ausgewertet werden, dass eine Reduzierung der exzentrizitätsbedingten Fehler erfolgt. In diesem Zusammenhang werden die Signale gewichtet.

Aus der US2002/0134927 ist ein Encoder bekannt, bei dem durch eine zusätzliche Abtastung insbesondere in Verbindung mit einer zusätzlichen Spur eine Exzentrizitäts-Korrektur während des Betriebs des Encoders möglich ist, ohne dass zuvor bei der Montage eine präzise Justierung erforderlich gewesen wäre.

In der Offenlegungsschrift EP 1 643 216 A1 ist ein Verfahren zur Zentrierung eines Körpers mit einer Winkelskalierung bekannt, bei dem eine Messuhr verwendet wird.

Als Alternative zur Verwendung einer Messuhr wird in der Offenlegungsschrift WO2006/114619 ein Abstandssensor vorgeschlagen, welcher im Abtastkopf integriert ist oder dort gemäß einem Ausführungsbeispiel am Abtastkopf angebracht ist.

Die bekannten Verfahren weisen den Nachteil auf, dass Exzentrizitäten nicht reduziert werden oder dass diese relativ aufwändig sind.

Der Erfindung liegt die Aufgabe zu Grunde, ein Verfahren zur Montage eines Körpers mit einer Winkelskalierung zu schaffen, welches sich insbesondere dadurch auszeichnet, dass ein überaus präziser Anbau möglich ist, bei vergleichsweise geringem Montageaufwand.

Diese Aufgabe wird durch ein Verfahren gemäß Anspruch 1 gelöst.

Das Verfahren betrifft die Montage eines Körpers mit einer Winkelskalierung an einem Maschinenteil, welches relativ zu einem weiteren Bauteil um eine Achse drehbar ist. Bei dem Verfahren wird zunächst der Körper am Maschinenteil (etwa an einer Welle) befestigt, so dass die Winkelskalierung, bedingt durch Maßtoleranzen, bezüglich der Achse eine Exzentrizität aufweist. Das Bauteil kann beispielsweise eine Trägerplatte sein. An diesem Bauteil bzw. an dieser Trägerplatte werden dann zwei Abtastköpfe derart positioniert und befestigt, dass durch die Abtastköpfe die Winkelskalierung abtastbar ist. Signalausgänge der Abtastköpfe werden in einem weiteren Schritt mit elektrischen Eingängen einer elektronischen Zählvorrichtung elektrisch verbunden. Danach wird das Maschinenteil mit dem Körper relativ zum Bauteil gedreht, so dass durch die Zählvorrichtung Positionssignale der beiden Abtastköpfe erfasst werden und weiterhin Zählwerte, basierend auf den jeweiligen Positionssignalen bestimmt werden. Des Weiteren wird die Differenz zwischen den Zählwerten bestimmt und die Differenz oder eine auf dieser Differenz basierende Größe ausgegeben. Schließlich wird der Körper bezüglich des Maschinenteils in der Weise verschoben, dass die Differenz oder die auf dieser Differenz basierende Größe so verändert wird, dass die Exzentrizität verkleinert wird.

Sofern erforderlich, kann der Körper in einem weiteren Schritt endgültig an dem Maschinenteil befestigt werden.

Eine auf der Differenz basierende Größe ist beispielsweise ein Winkelfehler, welcher dem Bediener direkt bei der Zentrierung der Winkelskalierung angegeben wird. In Abhängigkeit vom maximal zulässigen Winkelfehler kann dann der Bediener entscheiden wie genau er die Zentrierung vornehmen muss, bzw. wann der Zentriervorgang beendet werden kann.

Die Abtastköpfe werden um 180° gegeneinander versetzt befestigt. Im Übrigen umfasst die Erfindung auch Verfahren, bei denen mehr als zwei Abtastköpfe, z. B. vier Abtastköpfe zum Einsatz kommen.

Mit Vorteil wird ein Abtastkopf nach dem Verschieben des Körpers wieder demontiert.

In weiterer Ausbildung der Erfindung kann die Winkelskalierung eine Teilungsperiode von weniger als 50 μm, insbesondere weniger als 25 μm, mit Vorteil weniger als 10 μm aufweisen.

Die Zählvorrichtung oder die Abtastköpfe umfassen jeweils einen Interpolator, so dass innerhalb einer abgetasteten Teilungsperiode n Winkelpositionen bestimmbar sind, wobei n als eine natürliche Zahl größer $2^6$ angesehen werden kann. Beispielsweise kann n größer als $2^7$ sein. Beim Drehen des Maschinenteils mit dem Körper relativ zum Bauteil wird dabei pro Abtastung einer Teilungsperiode der jeweilige Zählwert um n Inkremente verändert. Unter dem Begriff Teilungsperiode ist der Mittenabstand zwischen zwei Skalenmarkierungen zu verstehen. Die Winkelskalierung kann beispielsweise eine nach einem optischen, magnetischen oder induktiven Prinzip abtastbare Winkelskalierung sein.

Gerade bei hoch auflösenden Winkelmesssystemen, die in der Regel Winkelskalierungen mit sehr kleinen Teilungsperioden und hohen Teilungsgenauigkeiten aufweisen, erweist sich die Erfindung als besonders vorteilhaft, weil bei derartigen Geräten eine überaus exakte Zentrierung der Winkelskalierungen notwendig ist um qualitativ hochwertige Messergebnisse zu Erreichen. Exzentrizitäten in der Größenordnung von Tausendstel Millimetern können sich hier schon nachteilig auswirken. Durch die Erfindung wird ein einfaches und dennoch genaues Verfahren zur Zentrierung von Winkelskalierungen geschaffen. Die Erfindung ist insbesondere vorteilhaft, wenn die Winkelskalierung einen kleinen mittleren Durchmesser, beispielsweise kleiner als 100 mm, aufweist.

Eine Vorrichtung zur Montage eines Körpers mit einer Winkelskalierung weist zwei Abtastköpfe auf, welche an einem Bauteil so angeordnet sind, dass die Winkelskalierung abtastbar ist. Entsprechend sind von den Abtastköpfen Positionssignale erzeugbar. Weiterhin weisen die Abtastköpfe elektrische Signalausgänge zur Übertragung der Positionssignale auf. Die Vorrichtung umfasst daneben eine elektronische Zählvorrichtung, deren elektrische Eingänge mit den Signalausgängen der Abtastköpfe verbunden sind. Die Zählvorrichtung weist ferner einen Differenzbildner auf. Dabei sind durch die Zählvorrichtung, basierend auf den Positionssignalen, Zählwerte erzeugbar. Außerdem ist durch den Differenzbildner die Differenz der Zählwerte bestimmbar. Optional können auch weitere auf der Differenz basierende Größen bestimmbar sein, wobei die Differenz oder die bestimmte(n) Größe(n) von der Zählvorrichtung ausgebbar sind.

Die auf der Differenz basierenden Größen werden in vorteilhafter Ausgestaltung der Erfindung mit einer Auswertelogik bzw. einem Mikroprozessor innerhalb der Zählvorrichtung bestimmt. Mit Vorteil weist die Zählvorrichtung weiterhin ein Display zur Ausgabe der Differenz der Zählwerte oder der auf der Differenz basierenden Größe auf.

Die Erfindung umfasst Körper, deren Winkelskalierung radial ausgerichtet ist aber auch Körper deren Winkelskalierung axial ausgerichtet ist, beispielsweise an einer Mantelseite eines zylindrischen Körpers.

Die Erfindung weist insbesondere den Vorteil auf, dass die Montage für den Anwender eines derartigen Winkelmessgerätes wesentlich vereinfacht ist, so dass der entsprechende Anwender beispielsweise nicht über eine komplexe Montageausrüstung verfügen muss. Weiterhin dient als Bezugsgeometrie für das Verschieben bzw. Zentrieren des Körpers dessen Winkelskalierung selbst, denn nur diese wird beim Zentriervorgang beobachtet. Eine weitere Hilfsgeometrie, beispielsweise ein separater Zentrierkreis oder eine präzise gefertigte Anschlagkante muss hier nicht vorgesehen werden.

Vorteilhafte Ausführungsformen des erfindungsgemäßen Verfahrens sind aus den Maßnahmen in den vom Anspruch 1 abhängigen Ansprüchen zu entnehmen.

Weitere Vorteile, sowie Einzelheiten des erfindungsgemäßen Verfahrens ergeben sich aus der nachfolgenden Beschreibung eines Ausführungsbeispiels anhand der beiliegenden Figuren.

Es zeigen die

Figur 1    eine Draufsicht auf eine Anordnung zur Montage eines Körpers mit einer Winkelskalierung,

Figur 2    eine Seitenansicht auf die Anordnung zur Montage eines Körpers mit einer Winkelskalierung,

Figur 3    die Seitenansicht auf die Anordnung mit einer Zählvorrichtung.

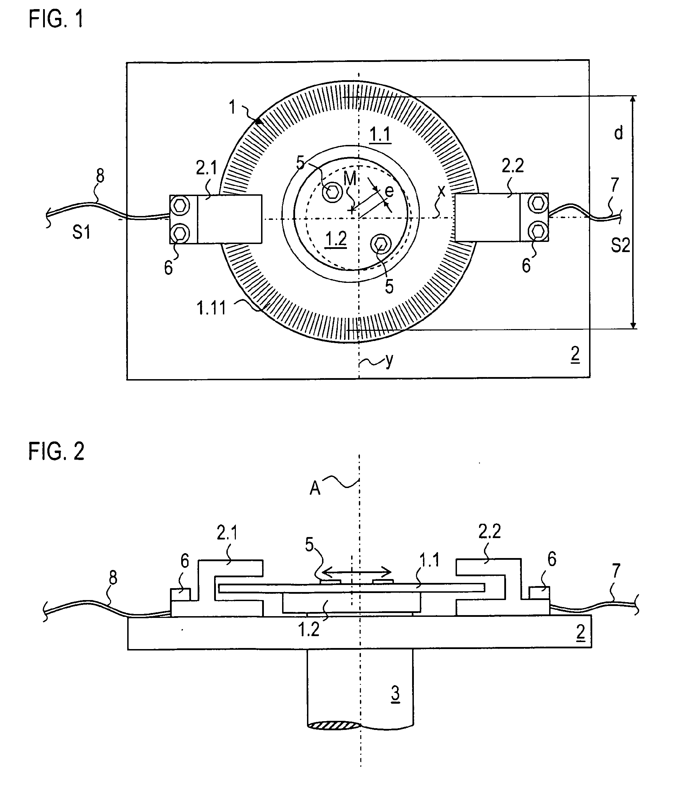

In der Figur 1 ist ein Körper 1 gezeigt, der eine Ringscheibe 1.1 und eine Sockelscheibe 1.2 umfasst. Auf der Ringscheibe 1.1, welche im vorgestellten Ausführungsbeispiel aus Glas gefertigt ist, ist eine Winkelskalierung 1.11 aufgebracht. Die Winkelskalierung 1.11 besteht aus radial zum Mittelpunkt M der Ringscheibe 1.1 gerichteten lichtundurchlässigen Teilungsstrichen, die gleichmäßig über den vollen Umfang auf der Oberfläche der Ringscheibe 1.1 angeordnet sind. Im vorliegenden Beispiel handelt es sich um eine Inkrementalteilung mit einer Teilungsperiode von 1 μm.

Die Ringscheibe 1.1 ist mit der Sockelscheibe 1.2, die hier aus Stahl gefertigt ist, drehfest verbunden, im Ausführungsbeispiel durch eine Klebeverbindung. Die Sockelscheibe 1.2 weist ihrerseits zwei Bohrungen auf, durch die Schrauben 5 gesteckt sind, zur Verbindung mit einem Maschinenteil, hier einer Welle 3. Auf Grund von Fertigungs- und Montagetoleranzen wird im Allgemeinen eine Exzentrizität e zwischen tatsächlicher Drehachse A und dem Mittelpunkt M der Winkelskalierung 1.11 auftreten. In der Figur 1 ist diese Exzentrizität e übertrieben groß dargestellt.

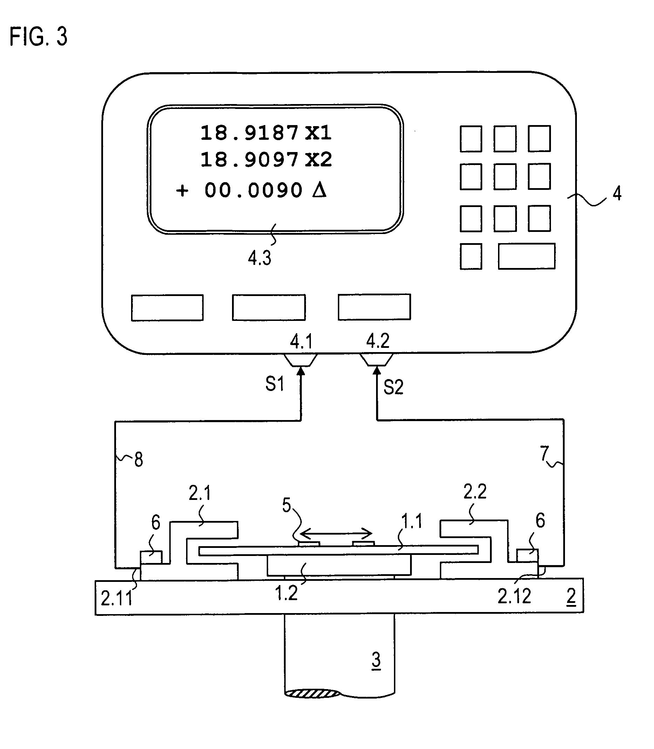

Die Welle 3 ist drehbar relativ zu einer Trägerplatte 2, die als stationäres Bauteil fungiert, gelagert. Die Trägerplatte 2 dient im Wesentlichen zur Aufnahme zweier Abtastköpfe 2.1, 2.2, die um 180° gegeneinander versetzt lösbar an dieser Trägerplatte 2 durch Schrauben 6 befestigt sind. Die Abtastköpfe 2.1, 2.2 sind jeweils identisch ausgestaltet und tasten die Winkelskalierung 1.11 nach einem optischen Prinzip ab. Insbesondere werden hier durch ein Durchlichtverfahren Positionssignale S1, S2 von den Abtastköpfen 2.1, 2.2 fotoelektrisch erzeugt, die über Signalausgänge 2.11, 2.12 und über Kabel 7, gemäß Figur 3, an Signaleingänge 4.1, 4.2 einer elektronische Zählvorrichtung 4 übertragen werden können. Die Zählvorrichtung 4 weist ein Display 4.3 auf zur Ausgabe bzw. Anzeige von Daten.

Gemäß dem erfindungsgemäßen Verfahren zur Montage des Körpers 1 wird zunächst der Körper 1 an der Welle 3 durch Eindrehen der Schrauben 5 befestigt, so dass sich der Körper 1 winkeltreu mit der Welle 3 drehen lässt.

Sodann werden die beiden Abtastköpfe 2.1, 2.2 an der Trägerplatte 2 mit Hilfe von weiteren Schrauben 6 befestigt. Die Positionierung der Abtastköpfe 2.1, 2.2 ist so ausgestaltet, dass diese die Winkelskalierung 1.11 umgreifen, so dass diese durch die Abtastköpfe 2.1, 2.2 abtastbar ist.

Im vorgestellten Ausführungsbeispiel sind die Signalausgänge 2.11, 2.12 der Abtastköpfe 2.1, 2.2 jeweils fest mit den Kabeln 7,8 verbunden. Entsprechend werden in einem weiteren Schritt die Kabel 7,8 die einen Stecker aufweisen, in eine entsprechende Buchse der Signaleingänge 4.1, 4.2 der elektronischen Zählvorrichtung 4 gesteckt, so dass also eine elektrische Verbindung hergestellt ist. Des Weiteren wird nun die Zählvorrichtung 4 durch Eingabe entsprechender Daten so konfiguriert, dass eine Anpassung auf die Teilungsperiode von 1 μm gegeben ist.

Als Nächstes wird die Zählvorrichtung 4 auf Null zurückgesetzt und danach die Welle 3 und damit auch der Körper 1 relativ zur Trägerplatte 2 um mindestens eine halbe Umdrehung gedreht. Dabei werden durch die Zählvorrichtung 4 die Positionssignale S1, S2 der beiden Abtastköpfe 2.1, 2.2 erfasst und Zählwerte X1, X2 als Maß für die Länge des abgetasteten Bogens bestimmt. Im vorgestellten Ausführungsbeispiel werden mit Hilfe eines Interpolators die Positionssignale S1, S2 in der Zählvorrichtung 4 interpoliert, so dass pro Abtastung einer Teilungsperiode von jedem der beiden Abtastköpfe 2.1, 2.2 in der Zählvorrichtung 4 der jeweilige Zählwert X1, X2 abhängig von der Drehrichtung um $n = 2^{10} = 1024$ inkrementiert oder dekrementiert wird. Demnach basieren also die Zählwerte X1, X2 auf den jeweiligen Positionssignalen S1, S2. Ferner wird durch die Zählvorrichtung 4 die Differenz Δ zwischen den Zählwerten X1, X2 bestimmt. Zu diesem Zweck ist in der Zählvorrichtung 4 ein Differenzbildner implementiert. Die Differenz A und die Zählwerte X1, X2 werden für einen Bediener am Display 4.3 ausgegeben. Gemäß dem Beispiel in der Figur 3 beträgt die Differenz Δ 9μm.

Im nächsten Schritt wird der Körper 1 bezüglich der Welle 3 in der Weise verschoben, dass die Differenz Δ und damit die Exzentrizität e verkleinert wird. Der Bediener findet durch das Drehen des Körpers 1 leicht heraus in welcher Drehstellung die angezeigte Differenz Δ maximal ist. In dieser Drehstellung befindet sich der Mittelpunkt M der Winkelskalierung 1.1 auf einer Achse y, welche orthogonal zu einer Achse x steht, wobei die Achse x beide Abtastköpfe 2.1, 2.2 schneidet, siehe Figur 1.

Das Vorzeichen der Differenz Δ am Display 4.3 weist den Bediener darauf hin in welche Richtung parallel zur Achse y innerhalb einer Ebene, die orthogonal zur Drehachse A zu liegen kommt, der Körper 1 verschoben bzw. justiert werden muss. Üblicherweise wird das verschieben durch Aufbringen von kleinen Stößen bzw. durch Klopfen an die Ringscheibe 1.1 oder an die Sockelscheibe 1.2 vorgenommen. Sofern die Schrauben 5 nur so fest angezogen sind, dass der Körper 1 auf diese Weise verschoben werden kann, brauchen die Schrauben 5 hierfür nicht gelöst werden. Anderenfalls wird der Bediener vor dem Verschieben die Schrauben 5 lockern und nach dem Verschieben bzw. Justieren wieder festziehen.

Diese Vorgehensweise kann iterativ wiederholt werden, bis die angezeigte Differenz Δ einen vorgegebenen maximal zulässigen Wert unterschreitet, so dass also die Anordnung eine tolerierbare Exzentrizität e aufweist und entsprechend exakte Messergebnisse erzielt werden können.

Alternativ zur Anzeige der Differenz Δ kann beispielsweise die Größe der Exzentrizität e, etwa im μm, dem Bediener ausgegeben werden. In diesem Fall wird durch einen Mikroprozessor innerhalb der Zählvorrichtung 4 die Exzentrizität e nach dem Zusammenhang e = Δ/2 bestimmt und am Display 4.3 angezeigt. Entsprechend wird dann der Körper bezüglich der Welle 3 in der Weise verschoben, dass die Exzentrizität e, welche eine auf der Differenz basierende Größe ist, verkleinert wird.

Als weitere Alternative oder ergänzend kann auch der Winkelfehler φ in der Zählvorrichtung 4 berechnet werden und am Display 4.3 angezeigt werden. Da φ in der Dimension Winkelsekunden aus dem Zusammenhang

$$\varphi['']= \frac{412 \cdot e\,[\mu m]}{d\,[mm]}$$

berechnet wird und e = Δ/2 gilt, basiert also die Größe Winkelfehler φ auch auf der Differenz Δ.

Nach dem Verschieben bzw. Zentrieren wird der Körper 1 an der Welle 3 durch Anziehen der Schrauben 6 mit vergleichsweise großem Drehmoment endgültig befestigt.

Als Nächstes wird ein Abtastkopf 2.2 durch Lösen der betreffenden Schrauben 6 der Trägerplatte 2 wieder entfernt. Ferner wird das Kabel 7 des anderen verbleibenden Abtastkopfs 2.1 von der Zählvorrichtung 4 abgekoppelt und beispielsweise an eine Maschinensteuerung zur Regelung der Welle 3 angeschlossen. Im Normalbetrieb wird also die Messung der Winkelstellung mit nur einem Abtastkopf 2.1 durchgeführt, wobei hier durch die genaue Justierung bzw. Zentrierung der Winkelskalierung 1.11 überaus exakte Messergebnisse erreichbar sind.

Der andere Abtastkopf 2.2 kann zusammen mit der Zählvorrichtung 4 zur Montage eines weiteren Körpers 1 mit einer Winkelskalierung 1.11, bzw. eines weiteren Winkelmesssystems verwendet werden.

## Patentansprüche

1. Verfahren zur Montage eines Körpers (1) mit einer Winkelskalierung (1.11) an einem Maschinenteil (3), welches relativ zu einem weiteren Bauteil (2) um eine Achse (A) drehbar ist, wobei bei dem Verfahren

   - der Körper (1) am Maschinenteil (3) befestigt wird, so dass die Winkelskalierung (1.11) bedingt durch Maßtoleranzen bezüglich der Achse (A) eine Exzentrizität (e) aufweist,
   - zwei Abtastköpfe (2.1, 2.2) am Bauteil (2) um 180° gegeneinander versetzt derart positioniert und befestigt werden, dass durch die Abtastköpfe (2.1, 2.2) die Winkelskalierung (1.11) abtastbar ist,
   - Signalausgänge (2.11, 2.12) der Abtastköpfe (2.1, 2.2) mit elektrischen Eingängen (4.1, 4.2) einer elektronischen Zählvorrichtung (4) verbunden werden,
   - das Maschinenteil (3) mit dem Körper (1) relativ zum Bauteil (2) gedreht wird,
   - durch die Zählvorrichtung (4) Positionssignale (S1, S2) der beiden Abtastköpfe (2.1, 2.2) erfasst und Zählwerte (X1, X2), basierend auf den jeweiligen Positionssignalen (S1, S2), bestimmt werden, wobei beim Drehen des Maschinenteils (3) mit dem Körper (1) relativ zum Bauteil (2) pro Abtastung einer Teilungsperiode der jeweilige Zählwert (X1, X2) um n Inkremente verändert wird, mit n als natürlicher Zahl größer $2^6$,
   - die Differenz ($\Delta$) zwischen den Zählwerten (X1, X2) bestimmt und die Differenz ($\Delta$) oder eine auf dieser Differenz ($\Delta$) basierende Größe ($\varphi$, e) ausgegeben wird,
   - der Körper (1) bezüglich des Maschinenteils (3) verschoben wird und wiederum die Differenz ($\Delta$) zwischen den Zählwerten (X1, X2) bestimmt und die Differenz ($\Delta$) oder eine auf dieser Differenz ($\Delta$) basierende Grösse ausgegeben wird,
   - diese Schritte iterativ wiederholt werden, bis die Differenz ($\Delta$) einen vorgegebenen maximal zulässigen Wert unterschreitet, so dass die Anordnung eine tolerierbare Exzentrizität aufweist,
   - ein Abtastkopf (2.2) nach dem Verschieben des Körpers (1) wieder demontiert wird.

2. Verfahren zur Montage eines Körpers (1) mit einer Winkelskalierung (1.11) gemäß dem Anspruch 1, wobei die eine auf der Differenz (A) basierende Größe ($\varphi$) ein Winkelfehler ist.

3. Verfahren zur Montage eines Körpers (1) mit einer Winkelskalierung (1.11) gemäß einem der vorhergehenden Ansprüche, wobei die Winkelskalierung (1.11) eine Teilungsperiode von weniger als 50 $\mu$m aufweist.

## Claims

1. Method for mounting a body (1) with angle scaling (1.11) on a machine part (3) which can be rotated relative to a further component (2) about an axis (A), wherein, in the method

   - the body (1) is fixed to the machine part (3), so that the angle scaling (1.11) exhibits an eccentricity (e) with respect to the axis (A) caused by dimensional tolerances,
   - two sensing heads (2.1, 2.2) on the component (2) are positioned and fixed so as to be offset by 180° in relation to each other, in such a way that the angle scaling (1.11) can be sensed by the sensing heads (2.1, 2.2),
   - signal outputs (2.11, 2.12) from the sensing heads (2.1, 2.2) are connected to electric inputs (4.1, 4.2) of an electronic counting device (4),
   - the machine part (3) having the body (1) is rotated relative to the component (2),
   - position signals (S1, S2) from the two sensing heads (2.1, 2.2) are detected by the counting device (4) and counter values (X1, X2) are determined on the basis of the respective position signals (S1, S2), wherein, during the rotation of the machine part (3) having the body (1) relative to the component (2), the respective counter value (X1, X2) is changed by n increments for each sensing of a scale division, where n is a natural number greater than $2^6$,
   - the difference ($\Delta$) between the counter values (X1, X2) is determined and the difference ($\Delta$) or a variable ($\varphi$, e) based on this difference ($\Delta$) is output,
   - the body (1) is displaced with respect to the machine part (3) and the difference ($\Delta$) between the counter values (X1, X2) is determined again, and the difference ($\Delta$) or a variable based on this difference ($\Delta$) is output,
   - these steps are repeated iteratively until the difference ($\Delta$) falls below a predefined maximum permissible value, so that the arrangement exhibits a tolerable eccentricity,
   - one sensing head (2.2) is de-mounted again hollowing the displacement of the body (1).

2. Method for mounting a body (1) with angle scaling (1.11) according to Claim 1, wherein the one variable ($\varphi$) based on the difference ($\Delta$) is an angular error.

3. Method for mounting a body (1) with angle scaling (1.11) according to one of the preceding claims, wherein the angle scaling (1.11) has a scale division of less than 50 μm.

## Revendications

1. Procédé de montage d'un corps (1) à une partie de machine (3) pouvant pivoter autour d'un axe (A), par rapport à un composant (2) supplémentaire, à l'aide d'une échelle d'angle (1.11), sachant qu'au cours du Procédé :

    - le corps (1) est fixé à la partie de machine (3), de sorte que l'échelle d'angle (1.11) comporte une excentricité (e) par rapport à l'axe (A) relative aux tolérances de mesure ;
    - deux têtes de balayage (2.1, 2.2) sont positionnées au niveau de composant (2) et fixées à lui en étant décalées de 180° l'une par rapport à l'autre de sorte que les têtes de balayage (2.1, 2.2) puissent palper l'échelle d'angle (1.11) ;
    - des sorties de signal (2.11, 2.12) des têtes de balayage (2.1, 2.2) sont reliées aux entrées (4.1, 4.2) électriques d'un dispositif de comptage (4) électronique ;
    - la partie de machine (3) dotée du corps (1) pivote par rapport au composant (2) ;
    - les signaux de position (s1, S2) des deux têtes de balayage (2.1, 2.2) sont détectés par le dispositif de comptage (4) et les valeurs de comptage (X1, X2) sont définies sur la base des signaux de position (S1, S2) respectifs, la valeur de comptage (X1, X2) respective étant modifiée de n incréments, n étant un nombre naturel supérieur à $2^6$, lors de la rotation de la partie de machine (3) dotée du corps (1) par rapport au composant (2), par balayage d'une période de pas ;
    - la différence ($\Delta$) entre les valeurs de comptage (X1, X2) est définie et la différence ($\Delta$) ou un ordre de grandeur ($\varphi$, e) basé sur la différence ($\Delta$) est envoyé ;
    - le corps (1) est décalé par rapport à la partie de machine (3) et la différence ($\Delta$) entre les valeurs de comptage (X1, X2) est de nouveau déterminée et la différence ($\Delta$) ou un ordre de grandeur basé sur la différence ($\Delta$) est envoyé ;
    - ces étapes sont répétées dans cet ordre, jusqu'à ce que la différence ($\Delta$) passe en dessous d'une valeur maximale admise prédéfinie, permettant que l'agencement présente une excentricité tolérable ;
    - une tête de balayage (2.2) à nouveau démontée après le déplacement du corps (1).

2. Procédé de montage d'un corps (1) à l'aide d'une échelle d'angle (1.11) selon la revendication 1, l'ordre de grandeur ($\varphi$) basé sur une différence ($\Delta$) étant une anomalie angulaire.

3. Procédé de montage d'un corps (1) à l'aide d'une échelle d'angle (1.11) selon l'une quelconque des revendications précédentes, l'échelle d'angle (1.11) comportant une période de pas inférieure à 50 μm.

FIG. 1

FIG. 2

FIG. 3

18.9187 **X1**

18.9097 **X2**

+ 00.0090 Δ

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3734870 A1
- DE 3726260 A1
- US 20020134927 A
- EP 1643216 A1
- WO 2006114619 A